# EUROPÄISCHE PATENTSCHRIFT

(11) **EP 4 008 509 B1**
(45) Veröffentlichungstag und Bekanntmachung des Hinweises auf die Patenterteilung: **07.06.2023**
(21) Anmeldenummer: 20201883.4
(22) Anmeldetag: 14.10.2020
(51) Int. Cl.: B27N 1/00, B27N 3/00, B27N 3/02, B27N 3/18, B27N 5/00, B65D 81/09, E04B 1/74

(54) **GESCHÄUMTE BIOGRANULATKÖRNER**
FOAMED BIOGRANULATE GRAINS
GRAINS BIOGRANULAIRES EXPANSÉS

(43) Veröffentlichungstag der Anmeldung: 08.06.2022
(73) Patentinhaber: Bichsel, Hannes, 3400 Burgdorf (CH)
(72) Erfinder: Bichsel, Hannes, 3400 Burgdorf (CH)
(74) Vertreter: Keller Schneider Patent- und Markenanwälte AG

(56) Entgegenhaltungen:
- WO-A1-92/04253
- WO-A1-95/25705
- DE-A1- 10 328 467
- DE-A1-102006 002 100
- GB-A- 2 366 853

## Beschreibung

### Technisches Gebiet

Die Erfindung betrifft ein Halbfabrikat zur Herstellung von Formkörpern, umfassend geschäumte Biogranulatl<örner, wobei die Biogranulatl<örner eine Beschichtung aufweisen, wobei die Beschichtung einen Klebstoff umfasst, womit die Biogranulatl<örner in einem Formkörper miteinander verbindbar sind. Die Erfindung betrifft weiter ein Verfahren zur Herstellung des Halbfabrikats sowie einen Formkörper, hergestellt aus dem Halbfabrikat, sowie ein Verfahren zur Herstellung des Formkörpers aus dem Halbfabrikat.

### Stand der Technik

Es ist seit langem bekannt, geschäumte Biogranulatl<örner als Werkstoff in verschiedenen Gebieten einzusetzen.

Unter geschäumten Biogranulatl<örnern werden sämtliche schäumbaren Getreide verstanden. Ein typischer Vertreter von geschäumten Biogranulatl<örner ist gepuffter Mais (ein Vertreter davon, welcher typischerweise nicht stofflich genutzt wird, ist das sogenannte Popcorn). Weiter kann auch Reis, Weizen, Roggen, Gerste, Hafer, Hirse, Quinoa, Dinkel etc. eingesetzt werden. Die geschäumten Biogranulatl<örner werden mit einem hydrothermisch Expansionsverfahren hergestellt. Das Getreide, insbesondere der Mais kann dazu vorgängig zerkleinert worden sein. Damit wird insbesondere bei der Herstellung von Formkörpern eine bessere mechanische Verbindung unter den gepufften Körnern erreicht, da diese nicht rund sind.

So werden geschäumte Biogranulatl<örner, insbesondere zum Beispiel gepuffter Mais, in loser Form als Verpackungsmaterial eingesetzt. Weiterhin ist es bekannt, gepufften Mais zu Formkörper zu verpressen und/oder zu verkleben, um formstabile Bauteile in unterschiedlichen Anwendungen zu erstellen.

Aus der EP 2 961 580 B1 (Univ. Göttingen Georg August) ist zum Beispiel bekannt, Popcorn in Holz- und/oder Verbundwerkstoffe, insbesondere der Spanplatten und Faserplatten, Dämmstoffplatten, Werkstoffplatten sowie Verbundwerkstoffe einzusetzen. Dazu werden Materialien aus zerkleinertem lignocellulosehaltigen Material oder Popcorn mit einem synthetischen oder naturnahen Bindemittel beleimt und unter Temperatur und Druck zu Verbundwerkstoffen verpresst. Auch die WO95/25705A, die die Präambel des Hauptanspruches offenbart, und WO92/04253A gehören zum relevanten Stand der Technik.

Der Nachteil der bekannten Verfahren liegt darin, dass die geschäumten Biogranulatl<örner nach der Beschichtung nur geringe Zeit haltbar sind. Die Herstellung des Halbfabrikats (geschäumte Biogranulatl<örner mit Klebstoff beschichten) erfolgt daher typischerweise an Ort und Stelle, wo die Formkörper hergestellt werden. Damit wird eine dezentrale und damit kostengünstige Herstellung des Halbfabrikats verhindert.

### Darstellung der Erfindung

Aufgabe der Erfindung ist es, ein dem eingangs genannten technischen Gebiet zugehörendes Halbfabrikat zur Herstellung von Formkörpern zu schaffen, welches besonders effizient herstellbar ist und zudem bei gleichbleibender Qualität lager- und transportfähig und rieselfähig bleibt.

Die Lösung der Aufgabe ist durch die Merkmale des Anspruchs 1 definiert. Gemäss der Erfindung umfasst die Beschichtung ein Pestizid.

Durch die Beschichtung, welche ein Pestizid umfasst, können die geschäumten Biogranulatl<örner besonders lange haltbar gemacht werden. Je nach Anwendungsgebiet der Halbfabrikate (Gebäudeisolation, Verpackung, Geschirr, Automobilteile, Möbel etc.) können unterschiedliche Pestizide vorgesehen sein, zum Beispiel Fungizide, Herbizide, Bakterizide, Insektizide, Molluskizide, Ovizide, Rodentizide etc. Es ist weiter denkbar, Kombinationen der obigen Pestizide einzusetzen, so zum Beispiel Rodentizide zusammen mit Oviziden. In der Anwendung im Fassadenbau bei Gebäuden können zum Beispiel Rodentizide und Fungizide vorgesehen sein, während beim Einsatz in Möbeln Insektizide und Fungizide vorgesehen sind. Besonders bevorzugt ist das Pestizid biologisch abbaubar. In Varianten kann auf diese Eigenschaft verzichtet werden.

Der Klebstoff kann grundsätzlich beliebig sein, insbesondere können Mischungen von mehreren Klebstoffen oder auch nur ein einziger Klebstoff vorgesehen sein. Vorzugsweise handelt es sich beim Klebstoff um einen biologisch abbaubaren Klebstoff. In Varianten kann auf diese Eigenschaft verzichtet werden.

Der Klebstoff ist derart beschaffen, dass die damit beschichteten geschäumten Biogranulatl<örner rieselfähig sind. Damit kann das Halbfabrikat besonders effizient in eine Pressform eingetragen werden, womit wiederum besonders homogene Formkörper hergestellt werden können. Der Klebstoff kann dazu zum Beispiel ein thermoplastisches Polymer umfassen. Der Klebstoff kann aber als reaktiver Klebstoff vorliegen. Dem Fachmann sind weitere Varianten bekannt.

Der Klebstoff wird vorzugsweise als Schmelze auf den geschäumten Biogranulatl<örner aufgetragen. In Varianten kann auch eine Lösung eingesetzt werden, wobei das Lösemittel nach dem Auftragen verdampft oder anderweitig entfernt wird.

Vorzugsweise sind der Klebstoff und das Pestizid biologisch abbaubar, so dass das Halbfabril<at als Ganzes biologisch abbaubar respektive umweltverträglich ist. Weiter bevorzugt sind der Klebstoff und das Pestizid biobasiert, d. h. aus erneuerbaren Ressourcen respektive nachwachsenden Rohstoffen gebildet. In Varianten können der Klebstoff und/oder das Pestizid auch nicht biologisch abbaubar und/oder nicht biobasiert sein.

Vorzugsweise umfasst der Klebstoff Polylactide (abgekürzt PLA) und/oder Polybutylenadipat-terephthalat (abgekürzt PBAT), vorzugsweise eine Mischung aus Polylactiden und Polybutylenadipat-terephthalat, bei welcher ein Anteil der Polylactide mehr als 1 gew. Y, vorzugsweise mehr als 10 gew. Y, insbesondere bevorzugt mehr als 30 gew. Y im Klebstoff beträgt. Damit wird ein biologisch abbaubarer Klebstoff erhalten, welcher einerseits die Herstellung eines rieselfähigen Halbfabrikats ermöglicht und zudem kostengünstig und einfach in der Anwendung ist.

Weitere mögliche Klebstoffe können, gegebenenfalls zusätzlich zu einer oder mehreren der obigen Klebstoffe, eine oder mehrere der folgenden Komponenten umfassen: Polyamide, Polyester und Polycarbonate, Polyether; Phenol- und Amin-Formaldehyde (wie z. B. Poly(phenolformaldehyd)-Harze, Poly(melaminformaldehyd)-Harze, Poly(harnstoffformaldehyd)-Harze und dergleichen); Polyimide; Polyimine; Polysaccharide (wie Cellulosen, Carboxymethylcellulosen, Celluloseacetate, Cellulosenitrate und dergleichen), Polysulfone, Polyall<ine. Dem Fachmann sind weitere Vertreter der Klebstoffe bekannt.

Vorzugsweise umfasst das Pestizid Siliziumdioxid, insbesondere Silikagel, besonders bevorzugt gemahlenes Silikagel und/oder eine Borverbindung, vorzugsweise Borsäure.

Bei Kieselgel und Borsäure handelt es sich um Trockenmittel, die bei Schädlingsbel<ämpfern als sicher gelten. Beide Stoffe entziehen den Schädlingen Wasser, womit diese austrocknen. Wird Kieselgel oder Borsäure von Nagetieren gefressen, so trocknen sie von innen aus. Eier von Schädlingen respektive die Schädlinge selbst trocknen ebenfalls aus oder werden an der Entwicklung gestört. Damit kann das Halbfabrikat von einer Vielzahl an Schädlingen geschützt werden.

Weiter hat der Einsatz von Kieselgel den Vorteil, dass damit das Beschichtungsverfahren optimiert werden kann, da Kieselgel als Bestandteil des Klebstoffes als Fliessverbesserer fungieren kann.

Der Einsatz von Kieselgel respektive Borsäure hat den Vorteil, dass dies für den Menschen weitgehend ungefährlich ist und zudem biologisch abbaubar respektive für die Natur unschädlich ist. Dem Fachmann sind allerdings auch weitere Pestizide bekannt, welche in den Halbfabrikaten eingesetzt werden können.

Vorzugsweise umfasst die Beschichtung mindestens eine erste, innere Schicht und eine zweite, äussere Schicht, wobei das Pestizid in der ersten, inneren Schicht ist. Silikagel (und auch weitere Pestizide) sind hygroskopisch. Durch die Aufnahme von Wasser kann das Silikagel seine Wirkung als Pestizid verlieren. Dadurch, dass über der das Pestizid umfassenden Schicht eine weitere Schicht als Klebschicht und Versiegelung vorgesehen ist, kann das Pestizid gegen die Aufnahme von Feuchtigkeit aus der Umgebung geschützt werden.

In Varianten kann auch genau eine Schicht vorgesehen sein, welche das Pestizid umfasst.

Prinzipiell kann der Aufbau mehrerer Schichten auch dann von Vorteil sein, wenn kein Pestizid vorgesehen ist. So kann damit zum Beispiel eine dickere Klebstoffschicht erreicht werden, welche besonders gleichmässig aufgetragen ist. Weiter können einer oder mehreren Schichten auch Farbstoffe, Duftstoffe und weitere Stoffe beigemengt werden.

Bevorzugt umfasst die erste innere Schicht eine Mischung aus Pestizid und Klebstoff. Auch wenn genau eine Schicht vorgesehen ist, kann diese einzige Schicht eine Mischung aus Pestizid und Klebstoff umfassen. Mit dieser Technik kann das Pestizid besonders gleichmässig auf die geschäumten Biogranulatl<örner aufgetragen werden. Dem Fachmann ist klar, dass auch weitere Schichten, insbesondere auch eine äusserste Schicht ein Pestizid umfassen kann. Es ist auch denkbar, die äusserste Schicht zum Beispiel mit einem Fungizid zu versetzen, während in einer inneren Schicht ein Rodentizid gegebenenfalls zusammen mit einem Fungizid vorgesehen ist (der Fachmann erkennt sofort, dass auch andere Schichtaufbauten möglich sind). Damit kann mit den Schichten die Art des Schädlings berücksichtigt werden.

In einem Verfahren zur Herstellung eines Halbfabrikats werden die geschäumten Biogranulatl<örner mit einem Klebstoff und einem Pestizid beschichtet.

Die Beschichtung wird vorzugsweise in mindestens einer ersten Coatiertrommel aufgetragen. Beim sogenannten Trommel-Coating in der Coatiertrommel wird das zu beschichtende Gut in die Trommel gegeben und dort, bei rotierender Trommel, mit dem Beschichtungsmaterial versetzt, typischerweise besprüht. Dem Fachmann sind unterschiedliche Typen von Coatiertrommeln und unterschiedliche Betriebsarten der Coatiertrommeln bekannt, wobei grundsätzlich sämtliche Typen von Coatiertrommeln und Betriebsarten für die vorliegende Beschichtung eingesetzt werden können. Grundsätzlich werden vorzugsweise die folgenden Schritte durchgeführt:
a. Eintragen der geschäumten Biogranulatl<örner in die erste Coatiertrommel;
b. Rotieren der Coatiertrommel;
c. Eintragen des Klebstoffes und des Pestizides.

In einer Vielzahl an Versuchen hat sich gezeigt, dass der Einsatz der Coatiertrommel, insbesondere ein zylindrischere Coatiertrommel zum Beschichten von geschäumten Biogranulatl<örner besonders vorteilhaft ist. Dem Fachmann ist aber klar, dass auch andere Beschichtungstechniken eingesetzt werden können, so zum Beispiel ein Sprühtrockner respektive das Wirbelschicht-Coatingverfahren oder dergleichen.

Bevorzugt umfasst die erste Coatiertrommel mindestens eine erste Lanze zum Auftragen der Beschichtung. Die Lanze ist vorzugsweise während des Beschichtungsverfahrens ausserhalb der Biogranulatl<örner angeordnet. Die Lanze ist damit bevorzugt ortsfest, in einer oberen Hälfte der Coatiertrommel angeordnet, das heisst, sie dreht nicht mit der rotierenden Coatiertrommel mit.

In Varianten kann die Coatiertrommel auch Austrittsdüsen oder -öffnungen für das Beschichtungsmaterial umfassen, welche fest mit der Trommel verbunden sind.

Vorzugsweise umfasst die erste Coatiertrommel eine zweite Lanze, wobei vorzugsweise mit der ersten Lanze der Klebstoff und mit der zweiten Lanze das Pestizid in die Coatiertrommel eingetragen wird. Damit kann das gesamte Verfahren in einer einzigen Coatiertrommel durchgeführt werden. In Varianten kann aber auch eine Kaskade an Coatiertrommeln vorgesehen sein, so dass in der ersten Coatiertrommel zum Beispiel die erste Schicht mit dem Pestizid und in der zweiten Coatiertrommel die zweite Schicht, ohne Pestizid aufgetragen wird. Dies hat den Vorteil, dass das teilbeschichtete geschäumte Biogranulatl<örner vor der weiteren Beschichtung auskühlen kann. Weiter kann auch dieselbe Lanze sequentiell für unterschiedliche Produkte vorgesehen sein. Damit besteht jedoch die Gefahr, dass die zweite Schicht durch das Material der ersten Schicht kontaminiert wird.

In einer weiteren Variante wird mit der Coatiertrommel, welche zwei Lanzen umfasst, in einem ersten Schritt Klebstoff über die erste Lanze aufgetragen, als zweite Schicht das Pestizid (z.B. als Pulver) über die zweite Lanze aufgetragen und als dritte Schicht wiederum den Klebstoff über die erste Lanze aufgetragen. Grundsätzlich können auch mehr als drei Schichten vorgesehen sein.

Vorzugsweise umfasst die erste Lanze mehrere Öffnungen, wobei der Klebstoff als Flüssigkeitsstrahl aus den mehreren Öffnungen austritt. Die Öffnungen respektive Düsen können Kreisrund oder auch länglich, als Schlitze ausgebildet sein. Die Anzahl der Öffnungen kann zwischen 1 und 50, vorzugsweise zwischen 3 und 15 liegen. Mit den mehreren Öffnungen kann ein gleichmässiger Auftrag auf die geschäumten Biogranulatl<örner erreicht werden. Es hat sich gezeigt, dass der Eintrag des Klebstoffes, insbesondere im Fall eines durch Erhitzen verflüssigten Polymers, der Auftrag als Flüssigkeitsstrahl von besonderem Vorteil ist, da damit der Klebstoff nicht zu schnell auskühlen kann. Beim Sprühen mit Druckluft besteht die Gefahr, dass sich der Klebstoff ausserhalb der Oberfläche der geschäumten Biogranulatl<örner vernetzt, so dass die geschäumten Biogranulatl<örner nicht beschichtet werden. Unter Umständen ist das Sprühverfahren mit Druckluft jedoch trotzdem erfolgreich, wenn die Temperatur des Gesamtsystems und der Innenluft hinreichend hoch gehalten wird - hierbei ist jedoch Vorsicht geboten, so dass die geschäumten Biogranulatl<örner durch die Hitze nicht verfärbt oder verbrannt werden.

Dem Fachmann ist allerdings klar, dass der Klebstoff (ob zusammen mit dem Pestizid oder nicht spielt keine Rolle) auch auf andere Weise als Flüssigkeit auf die geschäumten Biogranulatl<örner aufgetragen werden können, zum Beispiel durch ortsfest an der Trommelwand positionierte Düsen. Prinzipiell könnten die geschäumten Biogranulatl<örner aber auch in den flüssigen Klebstoff getaucht werden, um diese zu beschichten.

Bevorzugt wird mit der zweiten Lanze eine Mischung aus dem Klebstoff und dem Pestizid ausgetragen. Prinzipiell können die beiden Lanzen auch für andere Mehrschichtaufbauten eingesetzt werden.

Vorzugsweise werden gemäss obigem Verfahren innerhalb des Schrittes c. nacheinander die folgenden Schritte ausgeführt:
c1. Auftragen des Pestizids auf die geschäumten Biogranulatl<örner;
c2. Auftragen des Klebstoffs auf die geschäumten Biogranulatl<örner.

Vorzugsweise wird das Pestizid vorgängig mit dem Klebstoff vermengt, so dass das Pestizid besonders einfach auf die geschäumten Biogranulatl<örner aufgetragen werden kann. Der Klebstoff, in welchem das Pestizid aufgetragen wird, kann sich von dem Klebstoff unter Schritt c2 unterscheiden. Damit kann für das Auftragen des Pestizids ein erster Klebstoff eingesetzt werden und für die äussere Schicht, welche zum Verbinden der einzelnen geschäumten Biogranulatl<örner untereinander dient, ein zweiter Klebstoff eingesetzt werden. Der erste und der zweite Klebstoff müssen sich nicht grundlegend unterschieden, gegebenenfalls können sich diese lediglich in der Viskosität unterscheiden (z. B. unterschiedliches Verhältnis zwischen PLA und PBAT). Anderseits können auch unterschiedliche Klebstoffe, welche sich in mindestens einer Komponente unterscheiden, in den unterschiedlichen Schichten eingesetzt werden.

Das Pestizid und der Klebstoff werden vorzugsweise in einem Extruder vermengt. In diesem Fall kann direkt mit dem Extruder das Pestizid zusammen mit dem Klebstoff den geschäumten Biogranulatl<örnern zudosiert werden, insbesondere in einer Coatiertrommel. In Varianten kann mit dem Pestizid und dem Klebstoff auch ein Zwischenprodukt hergestellt werden, welches erhitzt und als Flüssigkeit über Düsen in die Coatiertrommel eingetragen wird. Dem Fachmann sind weitere Varianten bekannt.

Vorzugsweise wird nach dem Auftragen des Klebstoffes (mit oder ohne Zusatzstoffe) das Halbfabrikat respektive die beschichteten, geschäumten Biogranulatl<örner, abgekühlt, so dass sich die Beschichtung respektive die einzelne Schicht aushärten kann. Besonders bevorzugt findet der Kühlvorgang innerhalb der Coatiertrommel statt, bei rotierender Coatiertrommel. Damit wird die Schicht respektive Beschichtung verfestigt, womit ein Verkleben der geschäumten Biogranulatl<örner untereinander verhindert werden kann. Der Kühlvorgang kann nach jedem Auftrag einer Schicht (innere Schicht, äussere Schicht und gegebenenfalls weitere Schichten) erfolgen. Auf den Kühlvorgang kann auch verzichtet werden.

Der Kühlvorgang wird vorzugsweise durch Einblasen eines Gases oder Gasgemischs erreicht. Besonders bevorzugt wird trockenes Gas respektive Gasgemisch eingesetzt, um ein Verkleben und gegebenenfalls eine Wasseraufnahme durch das Pestizid (z. B. im Fall von Silikagel oder Borsäure) zu verhindern respektive zu vermindern. Weiter bevorzugt handelt es sich beim Gas um Stickstoff, da Stickstoff gut und günstig verfügbar ist und kaum Feuchtigkeit aufweist. Weiter kann auch Luft, getrocknete Luft, CO₂ etc. eingesetzt werden. Das Einblasen kann über die Lanzen erfolgen. Weiter kann das Einblasen über separate, mit der Trommel fest verbundene Düsen oder Koaxiale zur Coatiertrommel, z.B. Gegenstrom, erfolgen.

Statt durch Einblasen von Gas respektive Gasgemisch kann das Halbfabrikat respektive die eine oder mehrere Schichten aufweisenden geschäumten Biogranulatl<örner auch durch einen Umschüttvorgang abgekühlt werden. Dies kann zum Beispiel bei einer Kaskade von Coatiertrommeln bei einer Übertragung zwischen den Coatiertrommeln geschehen, indem die eine oder mehrere Schichten aufweisenden geschäumten Biogranulatl<örner mittels der Schwerkraft von dem Austrag der einen Coatiertrommel in den Eintrag der nächsten Coatiertrommel geschüttet werden. Dem Fachmann sind weitere Möglichkeiten bekannt, wie der Kühlvorgang umgesetzt werden kann.

Vorzugsweise wird das Halbfabrikat zur Herstellung eines Formkörpers verwendet. Unter Formkörper wird hierbei ein in sich stabiles Gebilde verstanden, im Unterschied zu einem losen Schüttgut. Das Halbfabrikat kann aber auch als rieselfähiges Schüttgut eingesetzt werden, ohne dass ein Formkörper gebildet wird, zum Beispiel als Verpacl<ungs- oder Isolationsmaterial. Weiter kann der Formkörper auch erst in der Anwendung als Isolations- oder Verpackungsmaterial gebildet werden. Das Halbfabrikat kann zum Beispiel in eine Kavität einer Mauer eingefüllt werden und anschliessend durch Erhitzen zu einem Formkörper verbunden werden. Damit muss das Isolationsmaterial nicht plattenförmig vorliegen, womit keine Anpassung vorgenommen und somit auch Abschnitte vermieden werden können. Damit kann besonders effizient und kostengünstig isoliert werden. Das Halbfabrikat kann auch als Verpackungsmaterial z. B. in einen Transportbehälter gefüllt werden, welcher einen gegebenenfalls unförmigen Gegenstand enthält, wobei anschliessend das Halbfabrikat durch Hitzeeinwirkung oder anderweitige Aktivierung zu einem Formkörper gebunden wird. Dem Fachmann sind weitere Anwendungen bekannt.

Vorzugsweise umfasst ein Isolationselement für die Gebäudeisolation einen solchen Forml<örper. Insbesondere der Einsatz des Halbfabrikats, umfassend ein Pestizid ermöglicht die Verwendung der Formkörper als Isolationselement, ohne die Gefahr, dass das Isolationselement Opfer von Schädlingen wird. Damit können geschäumte Biogranulatl<örner auch langfristig im Bau eingesetzt werden. Bei einer Renovation oder einem Abbruch eines solchen Gebäudes können die Isolationselement respektive die Formkörper einfach separiert und im Biomüll entsorgt werden, da vorzugsweise sämtliche Bestandteile der Formkörper, d. h. die geschäumten Biogranulatl<örner, der Klebstoff und das Pestizid biologisch abbaubar sind.

Vorzugsweise umfasst das Isolationselement mindestens eine erste Lage und eine zweite Lage, wobei die geschäumten Biogranulatl<örner in der ersten Lage eine geringere mittlere Korngrösse (z. B. nach DIN 18123) aufweisen als die geschäumten Biogranulatl<örner der zweiten Lage. Damit kann ein Isolationselement mit einem besonders optimalen Schallschutz erreicht werden. Der Aufbau kann in einem einzigen Herstellungsschritt erreicht werden, indem das Halbfabrikat mit unterschiedlichen Korngrössenverteilungen schichtweise in eine Pressform eingetragen wird und am Schluss unter Hitzeeinwirkung zum Isolationselement verbunden respektive verpresst wird. In Varianten können auch einzelne Isolationselemente mit unterschiedlichen Korngrössenverteilungen zu einem solchen Schallisolationselement zusammengesetzt werden. Das Isolationselement kann dabei mehr als zwei Lagen mit unterschiedlichen Korngrössenverteilungen aufweisen.

Bevorzugt wird das Halbfabrikat in eine Pressform eingetragen und anschliessend unter Hitzeeinwirkung zu einem Formkörper verbunden respektive verpresst. In Varianten kann auf das Verpressen auch verzichtet werden. Abhängig vom verwendeten Klebstoff können statt der Hitzeeinwirkung auch andere Techniken zur Aktivierung des Klebstoffes vorgesehen sein.

Vorzugsweise wird die Hitzeeinwirkung durch Bestrahlung, insbesondere mit einer Radiowellen-Bestrahlung erreicht. In Varianten kann die Hitzeeinwirkung auch mit Mikrowellen, durch Erhitzen der Pressform etc. erreicht werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a: eine schematische Darstellung eines Schnittbildes eines geschäumten Biogranulatl<orns mit einer Beschichtung, welche zwei Schichten umfasst;
- Fig. 1b: eine schematische Darstellung eines Schnittbildes eines geschäumten Biogranulatl<orns mit einer Beschichtung, welche drei Schichten umfasst;
- Fig. 2: eine schematische Darstellung eines Längsschnitts durch eine Coatiertrommel zum Beschichten von geschäumten Biogranulatl<örnern, mit zwei Lanzen;
- Fig. 3: eine schematische Darstellung eines Längsschnitts durch eine Kaskade einer ersten und einer zweiten Coatiertrommel zum Beschichten von geschäumten Biogranulatl<örnern, welche jeweils eine Lanze umfassen;
- Fig. 4a: eine schematische Darstellung eines Querschnitts durch ein Isolationselement mit einer Lage und;
- Fig. 4b: eine schematische Darstellung eines Querschnitts durch ein Isolationselement mit zwei Lagen.

Grundsätzlich sind in den Figuren gleiche Teile mit gleichen Bezugszeichen versehen.

### Wege zur Ausführung der Erfindung

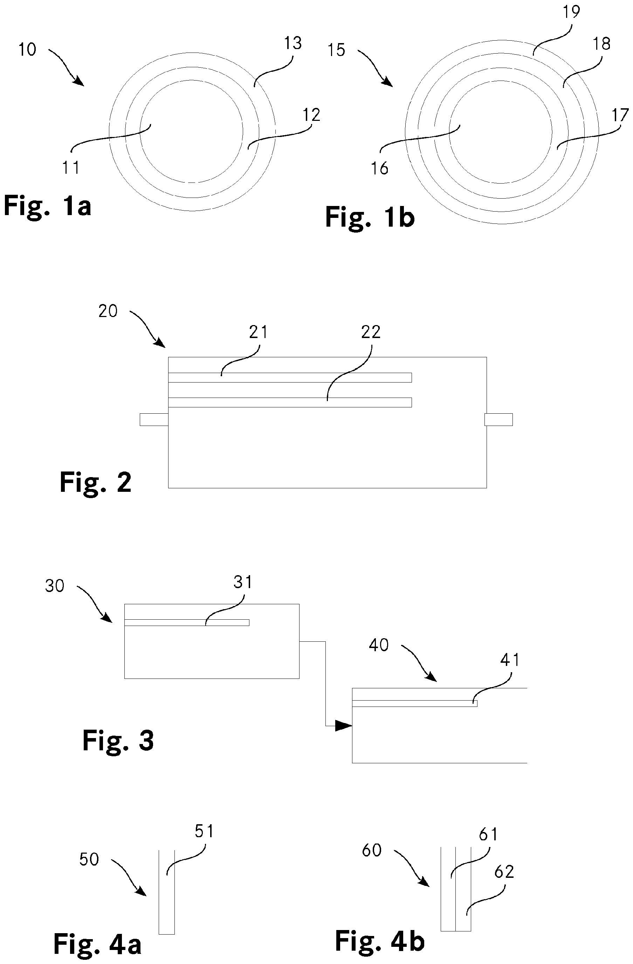

Die Figur 1a zeigt eine schematische Darstellung eines Schnittbildes eines geschäumten Biogranulatl<orns 11 mit einer Beschichtung, welche zwei Schichten umfasst, und so ein Halbfabrikat 10 bildet. Im vorliegenden Fall handelt es sich beim geschäumten Biogranulatl<orn 11 um gepufften Mais, vorzugsweise um gepufften Industriemais, welcher vorgängig zerkleinert (in kleine Stücke geschnitten, vorzugsweise 0.7 mm bis 4 mm) wird. Anschliessend werden die Körner nach Grösse sortiert (zum Beispiel durch Siebtechnil<en) und gepufft respektive geschäumt. Anschliessend wird auf dem geschäumten Biogranulatl<orn 11 eine erste Schicht aus einem Klebstoff umfassend ein Pestizid aufgebracht. Vorliegend handelt es sich beim Klebstoff um eine Mischung aus PLA und PBAT (zum Beispiel Novamont^{®}) und beim Pestizid um gemahlenes Silikagel. Beides wurde in einem Extruder vermengt und anschliessend als Schmelze auf den gepufften Mais aufgetragen. Weiter kann dazu ein Tanl<schmelzgerät mit einem Rührwerk vorgesehen sein, in welchem Novamont^{®} und das Silikagel vermengt und anschliessend über eine Pumpe auf den gepufften Mais aufgetragen werden. Für die beiden Beschichtungen kann jeweils ein Tanl<schmelzgerät vorgesehen sein. Nach einem Kühlvorgang zum Abkühlen der Schicht 12 erfolgt eine zweite Beschichtung mit demselben Klebstoff zur Versiegelung, um das Silikagel gegen die Aussenluft abzul<apseln. Damit wird verhindert, dass bei einer Lagerung das Silikagel Feuchtigkeit aufnehmen und damit sein Wirkung verlieren kann. Anschliessend wird wiederum abgekühlt. Die Abkühlung erfolgt über Stickstoffzufuhr.

Die Figur 1b zeigt eine weitere Variante eines Halbfabrikats 15, im Wesentlichen analog zur Figur 1a. Das vorliegende Halbfabrikat 15 umfasst als geschäumtes Biogranulatl<orn 16 gepuffter Mais. Als erste, innere Schicht 17 umfasst das Halbfabrikats 15 Novamont^{®}, als zweite, mittlere Schicht 18 Silikagel und als äussere Schicht 19 respektive als Versiegelungsschicht schliesslich nochmals Novamont^{®}.

Die Figur 2 zeigt eine schematische Darstellung eines Längsschnitts durch eine Coatiertrommel 20, zum Beschichten von geschäumten Biogranulatl<örnern, mit zwei Lanzen 21 und 22. Damit können mit einer einzigen Coatiertrommel 20 beide Schichten 12 und 13 auf den gepufften Mais aufgetragen werden, ohne dass eine Lanze mit unterschiedlichen Produkten gespiesen werden muss.

Die Figur 3 zeigt eine schematische Darstellung eines Längsschnitts durch eine Kaskade einer ersten Coatiertrommel 30 und einer zweiten Coatiertrommel 40, zum Beschichten von geschäumten Biogranulatl<örnern, welche jeweils eine Lanze 31 respektive 41 umfassen. Der gepuffte Mais wird in der ersten Coatiertrommel 30 mittels der Lanze 31 mit dem Novamont, welches Silikagel enthält, beschichtet. Anschliessend wird das noch heisse Zwischenprodukt über einen Fallstrang in die zweite Coatiertrommel 40 geführt. Durch den Fallstrang kühlt das Zwischenprodukt aus, so dass sich keine klumpen durch Verkleben der Körner bilden. Anschliessend wird mittels der Lanze 41 der zweiten Coatiertrommel 40 eine Novamont-Schicht aufgetragen, welche eine Versiegelungsschicht bildet und eine lange Haltbarkeit des Halbfabrikats 10 ermöglicht.

Die Figur 4a zeigt eine schematische Darstellung eines Querschnitts durch ein Isolationselement 50 mit einer Lage 51, welche aus dem Halbfabrikat 10 hergestellt ist. Dazu wurde das Halbfabrikat 10 in eine Pressform eingetragen. Aufgrund der Wahl des Klebstoffes ist das Halbfabrikat 10 besonders gut rieselfähig, so dass der Transport des Halbfabrikats 10 in die Pressform mit herkömmlichen Mitteln zum Transport von Schüttgütern, zum Beispiel herkömmlichen Injektoren für Granulate, automatisiert erfolgen kann. Anschliessend wird das Halbfabrikat 10 unter Druck mit Radiowellen beaufschlagt, so dass der Klebstoff der einzelnen Körner sich verbindet und einen Formkörper bildet. Das Isolationselement 50 kann zur Gebäudeisolation, als Verpackungsmaterial (Schockabsorber), Möbelbau etc. eingesetzt werden.

Die Figur 4b zeigt eine schematische Darstellung eines Querschnitts durch ein Isolationselement 60 mit zwei Lagen 61 und 62. Die beiden Lagen 61 und 62 unterscheiden sich in der Korngrössenverteilung. Damit kann ein besonders effektiver Schallschutz erreicht werden. Das Isolationselement 60 kann in gleicher Weise hergestellt werden wie das Isolationselement 50. Die mehreren Schichten können insbesondere in einem einzigen Herstellungsschritt erreicht werden, indem nacheinander Halbfabrikat 10 mit unterschiedlicher Korngrösse in die Form geführt wird und anschliessend das ganze unter Erhitzen verbunden wird. Alternativ können mehrere Isolationsplatten mit unterschiedlichen Korngrössen zu einem einzigen Isolationselement 60 verklebt werden.

Zusammenfassend ist festzustellen, dass erfindungsgemäss ein Halbfabrikat geschaffen wird, welches sich durch gute Haltbarkeit und optimale Rieselfähigkeit auszeichnet. Weiter wird ein besonders effizientes Herstellungsverfahren für das Halbfabrikat bereitgestellt und schliesslich ein besonders formstabiler Formkörper erreicht, welcher sich aufgrund der Pestizidzusätze ebenfalls durch sehr gute Haltbarkeit auszeichnet.

## Patentansprüche

1. Rieselfähiges Halbfabrikat zur Herstellung von Formkörpern, umfassend geschäumte Biogranulatl<örner, wobei die Biogranulatl<örner eine Beschichtung aufweisen, wobei die Beschichtung einen Klebstoff und ein Pestizid umfasst, **dadurch gekennzeichnet, dass** damit die Biogranulatl<örner in einem Formkörper miteinander verbindbar sind.

2. Halbfabrikat nach Anspruch 1, **dadurch gekennzeichnet, dass** der Klebstoff Polylactide und/oder Polybutylenadipat-terephthalat, vorzugsweise eine Mischung aus Polylactiden und Polybutylenadipat-terephthalat, bei welcher ein Anteil der Polylactide mehr als 1 gew. Y, vorzugsweise mehr als 10 gew. Y, insbesondere bevorzugt mehr als 30 gew. Y im Klebstoff beträgt.

3. Halbfabrikat nach Anspruch 1 oder 2, **dadurch gekennzeichnet, dass** das Pestizid Siliziumdioxid, insbesondere Silikagel, besonders bevorzugt gemahlenes Silikagel und/oder eine Borverbindung, vorzugsweise Borsäure umfasst.

4. Halbfabrikat nach einem der Ansprüche 1 bis 3, **dadurch gekennzeichnet, dass** das die Beschichtung mindestens eine erste, innere Schicht und eine zweite, äussere Schicht umfasst, wobei das Pestizid in der ersten, inneren Schicht ist.

5. Halbfabrikat nach Anspruch 4, **dadurch gekennzeichnet, dass** die erste, innere Schicht eine Mischung aus Pestizid und Klebstoff umfasst.

6. Verfahren zur Herstellung eines Halbfabrikats nach einem der Ansprüche 1 bis 5, **dadurch gekennzeichnet, dass** geschäumte Biogranulatkörner mit einem Klebstoff und einem Pestizid beschichtet werden.

7. Verfahren nach Anspruch 6, **dadurch gekennzeichnet, dass** die Beschichtung in mindestens einer ersten Coatiertrommel aufgetragen wird, mit den Schritten:
a. Eintragen der geschäumten Biogranulatl<örner in die erste Coatiertrommel;
b. Rotieren der ersten Coatiertrommel;
c. Eintragen des Klebstoffes und des Pestizides.

8. Verfahren nach Anspruch 7, **dadurch gekennzeichnet, dass** die erste Coatiertrommel mindestens eine erste Lanze zum Auftragen der Beschichtung umfasst, welche vorzugsweise während des Beschichtens ausserhalb der Biogranulatl<örner angeordnet ist.

9. Verfahren nach Anspruch 7 oder 8, **dadurch gekennzeichnet, dass** die erste Coatiertrommel eine zweite Lanze umfasst und wobei mit der ersten Lanze der Klebstoff und mit der zweiten Lanze das Pestizid in die Coatiertrommel eingetragen wird.

10. Verfahren nach einem der Ansprüche 7 bis 9, **dadurch gekennzeichnet, dass** die erste Lanze mehrere Öffnungen umfasst, wobei der Klebstoff als Flüssigkeitsstrahl aus den mehreren Öffnungen austritt.

11. Verfahren nach Anspruch 9, **dadurch gekennzeichnet, dass** mit der zweiten Lanze eine Mischung aus dem Klebstoff und dem Pestizid ausgetragen wird.

12. Verfahren nach Anspruch 7, **dadurch gekennzeichnet, dass** innerhalb des Schrittes c. nacheinander die folgenden Schritte ausgeführt werden:
c1. Auftragen des Pestizids auf die geschäumten Biogranulatl<örner;
c2. Auftragen des Klebstoffs auf die geschäumten Biogranulatl<örner.

13. Formkörper umfassend ein Halbfabrikat nach einem der Ansprüche 1 bis 5.

14. Fassadenelement für die Gebäudeisolation, umfassend einen Formkörper nach Anspruch 13.

15. Fassadenelement nach Anspruch 14, **dadurch gekennzeichnet, dass** das Fassadenelement mindestens eine erste Lage und eine zweite Lage umfasst, wobei die geschäumten Biogranulatl<örner in der ersten Lage eine geringere Korngrössen aufweisen als die geschäumten Biogranulatl<örner der zweiten Lage.

16. Verfahren zur Herstellung eines Formkörpers nach Anspruch 13, **dadurch gekennzeichnet, dass** das Halbfabrikat in eine Pressform eingetragen und anschliessend unter Hitzeeinwirkung zu einem Formkörper verbunden wird.

17. Verfahren nach Anspruch 15, **dadurch gekennzeichnet, dass** die Hitzeeinwirkung durch Bestrahlung, insbesondere mit einer Radiowellen-Bestrahlung erfolgt.

## Claims

1. Semi-finished pourable product for the production of mouldings, comprising foamed biogranulate grains, the biogranulate grains having a coating, the coating comprising an adhesive and a pesticide, **characterised in that** therewith the biogranulate grains can be bonded to one another in a moulding.

2. Semi-finished product according to claim 1, **characterized in that** the adhesive comprises polylactides and/or polybutylene adipate terephthalate, preferably a mixture of polylactides and polybutylene adipate terephthalate, in which a proportion of the polylactides is more than 1 Y by weight, preferably more than 10 Y by weight, in particular preferably more than 30 Y by weight in the adhesive.

3. Semi-finished product according to claim 1 or 2, **characterised in that** the pesticide comprises silicon dioxide, in particular silica gel, particularly preferably ground silica gel and/or a boron compound, preferably boric acid.

4. Semi-finished product according to any one of claims 1 to 3, **characterized in that** the coating comprises at least a first, inner layer and a second, outer layer, wherein the pesticide is in the first, inner layer.

5. Semi-finished product according to claim 4, **characterized in that** the first, inner layer comprises a mixture of pesticide and adhesive.

6. A process for producing a semi-finished product according to any one of claims 1 to 5, **characterized in that** foamed biogranlutate grains are coated with an adhesive and a pesticide.

7. Process according to claim 6, **characterized in that** the coating is applied in at least one first coating drum, comprising the steps:
a. Introducing the foamed biogranulates into the first coating drum;
b. Rotating the first coating drum;
c. Introducing the adhesive and the pesticide.

8. Method according to claim 7, **characterized in that** the first coating drum comprises at least one first lance for applying the coating, which is preferably arranged outside the biogranulate grains during coating.

9. Method according to claim 7 or 8, **characterized in that** the first coating drum comprises a second lance and wherein with the first lance the adhesive and with the second lance the pesticide is introduced into the coating drum.

10. The method according to any one of claims 7 to 9, **characterized in that** the first lance comprises a plurality of openings, wherein the adhesive emerges from the plurality of openings as a liquid jet.

11. Method according to claim 9, **characterized in that** a mixture of the adhesive and the pesticide is discharged with the second lance.

12. Method according to claim 7, **characterized in that** within step c. the following steps are carried out in succession:
c1. Application of the pesticide to the foamed biogranulates;
c2. Applying the adhesive to the foamed biogranulate grains.

13. Moulding comprising a semi-finished product according to any one of claims 1 to 5.

14. Facade element for building insulation comprising a moulded body according to claim 13.

15. Facade element according to claim 14, **characterized in that** the facade element comprises at least a first layer and a second layer, wherein the foamed biogranulate grains in the first layer have a smaller grain size than the foamed biogranulate grains of the second layer.

16. Process for producing a moulded body according to claim 13, **characterized in that** the semi-finished product is introduced into a press mould and is subsequently joined under the action of heat to form a moulded body.

17. Process according to claim 15, **characterised in that** the heat action is effected by irradiation, in particular with radio wave irradiation.

## Revendications

1. Produit semi-fini versable pour la production de pièces moulées, comprenant des grains de biogranulat expansés, les grains de biogranulat présentant un revêtement, le revêtement comprenant un adhésif et un pesticide, **caractérisé en ce que** les grains de biogranulat peuvent être liés les uns aux autres dans une pièce moulée.

2. Produit semi-fini selon la revendication 1, **caractérisé en ce que** l'adhésif comprend des polylactides et/ou du polybutylène adipate téréphtalate, de préférence un mélange de polylactides et de polybutylène adipate téréphtalate, dans lequel une proportion des polylactides est supérieure à 1 % en poids, de préférence supérieure à 10 % en poids, en particulier de préférence supérieure à 30 % en poids dans l'adhésif.

3. Produit semi-fini selon la revendication 1 ou 2, **caractérisé en ce que** le pesticide comprend du dioxyde de silicium, notamment du gel de silice, en particulier de préférence du gel de silice broyé et/ou un composé du bore, de préférence de l'acide borique.

4. Produit semi-fini selon l'une quelconque des revendications 1 à 3, **caractérisé en ce que** le revêtement comprend au moins une première couche, intérieure, et une deuxième couche, extérieure, le pesticide se trouvant dans la première couche, intérieure.

5. Produit semi-fini selon la revendication 4, **caractérisé en ce que** la première couche interne comprend un mélange de pesticide et d'adhésif.

6. Procédé de production d'un produit semi-fini selon l'une quelconque des revendications 1 à 5, **caractérisé en ce que** les grains de biogranlutat expansés sont enrobés d'un adhésif et d'un pesticide.

7. Procédé selon la revendication 6, **caractérisé en ce que** le revêtement est appliqué dans au moins un premier tambour de revêtement, comprenant les étapes :
a. Introduire les biogranulats expansés dans le premier tambour d'enrobage ;
b. Faire tourner le premier tambour d'enrobage ;
c. Introduction de l'adhésif et du pesticide.

8. Procédé selon la revendication 7, **caractérisé en ce que** le premier tambour d'enrobage comprend au moins une première lance d'application de l'enrobage, qui est de préférence disposée à l'extérieur des grains biogranulés pendant l'enrobage.

9. Procédé selon la revendication 7 ou 8, **caractérisé en ce que** le premier tambour d'enrobage comprend une deuxième lance et dans lequel avec la première lance l'adhésif et avec la deuxième lance le pesticide sont introduits dans le tambour d'enrobage.

10. Procédé selon l'une quelconque des revendications 7 à 9, **caractérisé en ce que** la première lance comprend une pluralité d'ouvertures, dans lequel l'adhésif sort de la pluralité d'ouvertures sous la forme d'un jet de liquide.

11. Procédé selon la revendication 9, **caractérisé en ce qu'**un mélange de l'adhésif et du pesticide est déchargé avec la deuxième lance.

12. Procédé selon la revendication 7, **caractérisé en ce que** dans l'étape c. les étapes suivantes sont réalisées successivement :
c 1. Application du pesticide sur les biogranulés moussés ;
c2. Application de l'adhésif sur les grains de biogranulés expansés.

13. Moulage comprenant un produit semi-fini selon l'une quelconque des revendications 1 à 5.

14. Élément de façade pour l'isolation du bâtiment comprenant un corps moulé selon la revendication 13.

15. Élément de façade selon la revendication 14, **caractérisé en ce que** l'élément de façade comprend au moins une première couche et une deuxième couche, les grains de biogranulés expansés de la première couche ayant une granulométrie inférieure à celle des grains de biogranulés expansés de la deuxième couche.

16. Procédé de fabrication d'un corps moulé selon la revendication 13, **caractérisé en ce que** le produit semi-fini est introduit dans un moule de presse et est ensuite assemblé sous l'action de la chaleur pour former un corps moulé.

17. Procédé selon la revendication 15, **caractérisé en ce que** l'action de la chaleur est effectuée par irradiation, en particulier par irradiation par ondes radio.
